# EUROPÄISCHE PATENTSCHRIFT

(11) **EP 1 467 899 B1**
(45) Veröffentlichungstag und Bekanntmachung des Hinweises auf die Patenterteilung: **14.06.2006**
(21) Anmeldenummer: 03702471.8
(22) Anmeldetag: 20.01.2003
(51) Int. Cl.: B60R 25/00

(54) **SCHLIESSSYSTEM, INSBESONDERE FÜR EIN KRAFTFAHRZEUG**
LOCKING SYSTEM, IN PARTICULAR FOR A MOTOR VEHICLE
SYSTEME DE VERROUILLAGE, NOTAMMENT D'UN VEHICULE AUTOMOBILE

(30) Priorität: 23.01.2002 DE 10202332
(43) Veröffentlichungstag der Anmeldung: 20.10.2004
(73) Patentinhaber: DaimlerChrysler AG, 70567 Stuttgart (DE); Marquardt GmbH, 78604 Rietheim-Weilheim (DE)
(72) Erfinder: GEBER, Michael, 72574 Bad Urach (DE); POHLMANN, Andreas, 71263 Weil der Stadt (DE); REINHARDT, Matthias, 71067 Sindelfingen (DE); RUTHER, Markus, 73760 Ostfildern (DE); HIPP, Uwe, 72514 Inzigkofen-Engelwies (DE); MATTES, Johannes, 78567 Friedingen (DE); MUELLER, Karl, 78628 Rottweil-Neufra (DE); WEISSER, Dietmar, 78604 Rietheim-Weilheim (DE)
(86) Internationale Anmeldenummer: PCT/EP2003/000486
(87) Internationale Veröffentlichungsnummer: WO 2003/062026

(56) Entgegenhaltungen:
- EP-A- 0 492 692
- EP-A- 0 571 718
- EP-A- 1 046 558
- EP-A- 1 081 898
- EP-A- 1 127 757
- WO-A-93/25987
- DE-A- 4 340 260

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradvernegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Mittel zum Senden und/oder Empfangen von Signalen. Im bestimmungsgemäßen Betrieb ist zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist

Solche bedienungsabhängig arbeitende Schließsysteme sind auch mit bedienungsunabhängigen, so genannten "Keyless"-Funktionalitäten weiterentwickelt. So ist bei der "Keyless Entry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "Keyless Go"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Für die Ermöglichung der Keyless-Funktionalitäten ist der Schlüssel ständig im betriebsbereiten Zustand, so daß der Schlüssel ständig Energie verbraucht. Dieser Energieverbrauch liegt selbst bei einem neuen Schlüssel vor, der noch gar nicht benutzt worden ist. Bei einem beispielsweise vor der Auslieferung des Kraftfahrzeugs auf Lager liegendem Schlüssel oder auch einem Ersatzschlüssel kann dies zur vorzeitigen Erschöpfung der im Schlüssel befindlichen Batterie führen. Im Extremfall kann der Schlüssel bei Auslieferung an den Benutzer sogar nicht mehr funktionstüchtig sein.

Die EP 1 127 757 A2 beschreibt ein Schließsystem nach dem Oberbegriff des Anspruchs 1, insbesondere für die bedienungsunabhängige Zugangs- und/oder Fahrberechtigung in der Art einer Keyless Entry/Go-Funktionalität und/oder für die bedienungsabhängige Zugangs- und/oder Fahrberechtigung bei einem Kraftfahrzeug, mit einer wenigstens zwei Zustände besitzenden, als Steuereinrichtung ausgebildeten ersten Einrichtung, wie einer Steuereinrichtung zur Ent- und/oder verriegelung der Autotüren, des Zündschlosses, der Lenkradverriegelung, zur Freigabe und/oder Sperrung der wegfahrsperre, des Motorsteuergeräts oder dgl. und mit einer zugehörigen, in der Art eines elektronischen Schlüssels, eines ID- Gebers, einer Chipkarte oder dgl. ausgebildeten zweiten Einrichtung, wobei die beiden Einrichtungen zu deren bestimmungsgemäßen Betrieb Mittel zum Senden und/oder Empfangen von Signalen besitzen, und wobei es sich insbesondere bei wenigstens einem der zwischen der zweiten Einrichtung und der ersten Einrichtung übertragenen Signale um ein codiertes Betriebssignal zur Authentikation der zweiten Einrichtung handelt, so dass nach positiver Auswertung des übertragenen Betriebasignals bei berechtigter zweiter Einrichtung eine Änderung des Zustandes der ersten Einrichtung bewirkbar ist.

Der Erfindung liegt die Aufgabe zugrunde, das mit "Keyless"-Funktionalität ausgestattete Schließsystem derart weiterzuentwickeln, daß der Energiebedarf vor Auslieferung des Schlüssels verringert ist.

Diese Aufgabe wird bei einem gattungsgemäßen Schließsystem durch die kennzeichnenden Merkmale des Anspruchs 1 gelöst.

Beim erfindungsgemäßen Schließsystem ist die als Schlüssel dienende zweite Einrichtung vor deren erstmaligen Inbetriebnahme in einem Schlafzustand, bei dem keine bedienungsunabhängige Funktionalität ermöglicht ist, mit verringerter Energieaufnahme befindlich. Die zweite Einrichtung wird nun bei der ersten bedienerabhängigen Authentikation, also bei der Erstauthentikation, vom Schlafzustand in einen Bereitschaftszustand, bei dem eine bedienungsunabhängige Funktionalität wenigstens teilweise ermöglicht ist, übergeführt. Bei dem aus der DE 43 40 260 A1 bekannten Schließsystem ist im Kraftfahrzeug ein elektronisches Zündschloß für die bedienungsabhängige Fahrberechtigung angeordnet. Das Zündschloß weist eine Aufnahme auf, in die die zweite Einrichtung zur
bedienungsabhängigen Authentikation durch den Benutzer eingeführt wird. Erfindungsgemäß wird das Zündschloß auch zur Erstauthentikation für die Überführung der zweiten Einrichtung vom Schlaf- in den Bereitschaftszustand verwendet. Hierzu wird die Erstauthentikation im Zündschloß nach Einstecken des als zweite Einrichtung dienenden Schlüssels in die Aufnahme durchgeführt. Vorteilhafterweise kann dies der Benutzer zum einen selbst durchführen, so daß die Energieeinsparung bis zur tatsächlichen Nutzung des Schlüssels andauert. Zum anderen kann damit die erstmalige Inbetriebnahme des Schlüssels ohne zusätzliche Einrichtungen und folglich ohne Mehrkosten vorgenommen werden. Weitere Ausgestaltungen der Erfindung sind Gegenstand der Unteransprüche.

Es bietet sich an, daß die zweite Einrichtung im Schlafzustand in einem vollständig abgeschalteten Zustand ist. Dadurch ist bei der zweiten Einrichtung vor der erstmaligen Inbetriebnahme im wesentlichen kein Energieverbrauch vorhanden. Zweckmäßigerweise ist die zweite Einrichtung bei deren Herstellung, und insbesondere bei deren Auslieferung an den Benutzer, im Schlafzustand befindlich. Damit ist die zweite Einrichtung selbst bei sehr langer Lagerung vor deren Auslieferung noch in neuwertigem Zustand.

Die mit der Erfindung erzielten Vorteile bestehen insbesondere darin, daß eine Energieeinsparung für die zweite Einrichtung bis zu deren Gebrauch erzielbar ist. Insbesondere bis zur Auslieferung der zweiten Einrichtung, beispielsweise wenn sich diese noch auf Lager befindet, wird eine weitgehende E-nergieeineparung erreicht. Dadurch wird die Lebensdauer der in der zweiten Einrichtung benötigten Batterie verlängert. Handelt es sich bei der zweiten Einrichtung um:einen Ereatzschlüssel, so kann vorteilhafterweise verhindert werden, daß dessen Batterie sich vorzeitig erschöpft und dieser in einer Notsituation nicht einsatzbereit ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem, insbesondere mit dessen bedienungsunabhängigen Funktionen,
- Fig. 3: ein schematisches Blockschaltbild des ID-Gebers mit einem Diagramm zur Übertragung der Signale und
- Fig. 4: schematisch das Schließsystem mit dessen bedienungsabhängigen Funktionen.

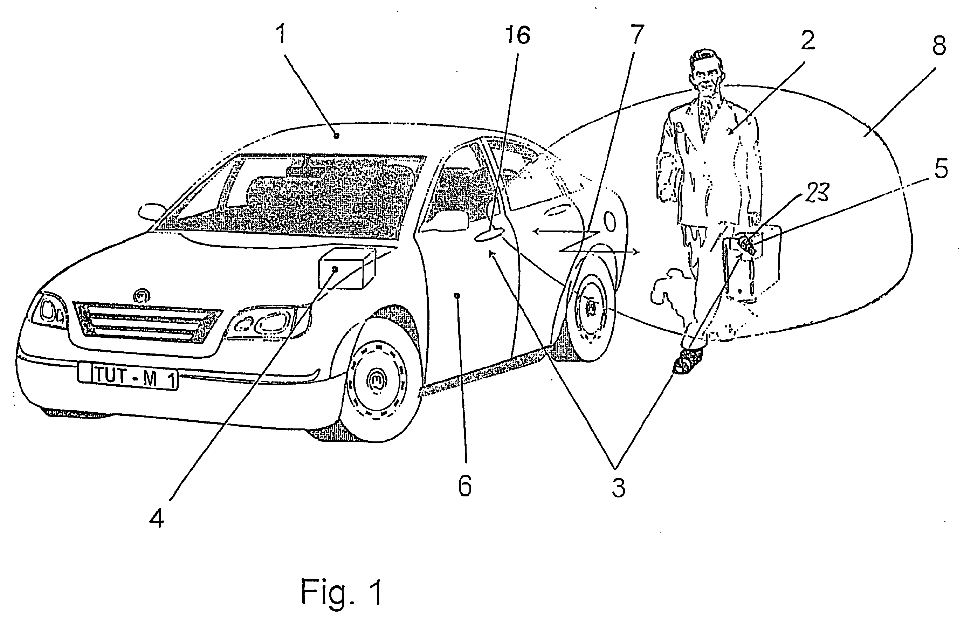

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 bedienungsunabhängig Zugang zum Kraftfahrzeug 1 besitzt.

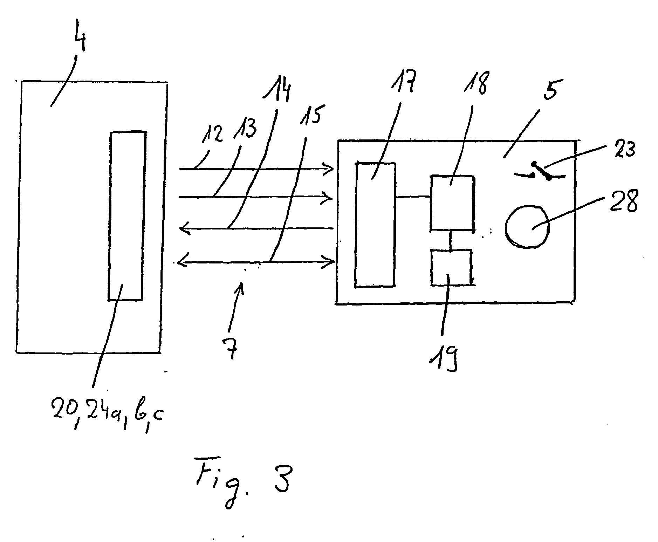

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der Keyless Entry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

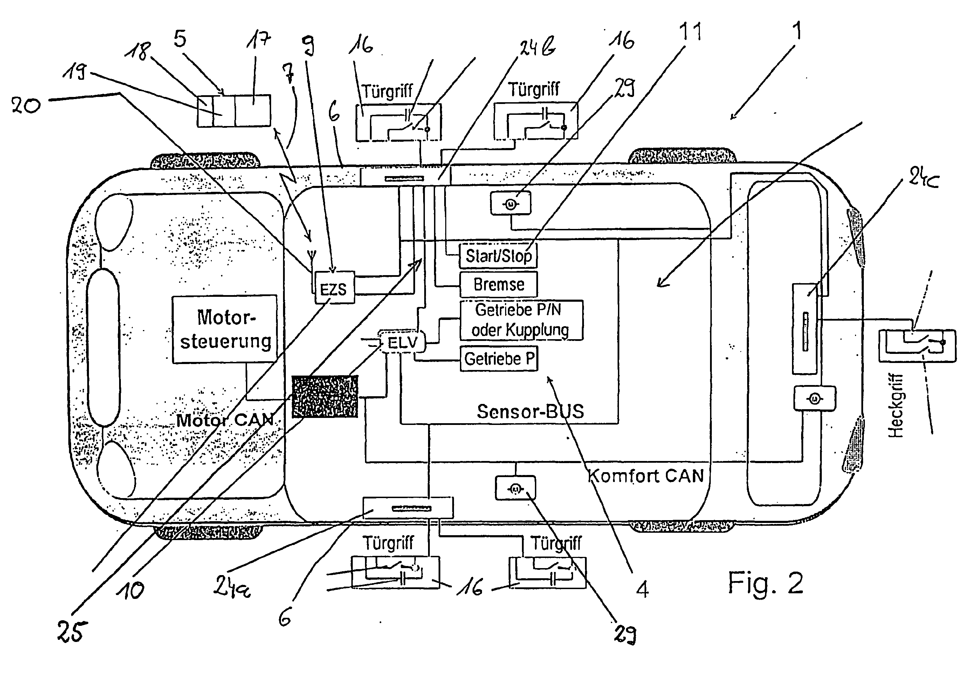

Das Schließsystem 3 stellt weiterhin bedienungsunabhängig die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 oder der Lenkradverriegelung 10, die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der Keyless Go-Funktionalität ausgelöst.

Die bedienungsunabhängige Funktionsweise des erfindungsgemäßen Schließsystems 3 soll nun anhand der Fig. 3 näher erläutert werden. Zunächst sendet die erste Einrichtung 4 ein als Wecksignal bezeichnetes elektromagnetisches Signal 12 für die zugehörige zweite Einrichtung 5. Dadurch wird die zweite Einrichtung 5 aus einem Bereitschaftszustand mit verringertem Energiebedarf in einen aktivierten Zustand für den bestimmungsgemäßen Betrieb übergeführt. Danach sendet die erste Einrichtung 4 wenigstens ein weiteres elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle und/oder im Kraftfahrzeug 1 befindlich ist. Nachfolgend sendet die zweite Einrichtung 5 ein die Information zum ermittelteten Standort beinhaltendes weiteres Signal 14 zur ersten Einrichtung 4, das im folgenden auch als Rückantwortsignal bezeichnet ist. Schließlich wird dann, wie bereits beschrieben, das codierte elektromagnetische Betriebssignal 15 zur Authenükation zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild ebenfalls in Fig. 3 gezeigt ist, weist einen Sender/Empfänger 17 und eine beispielsweise aus einem Mikrocomputer bestehende Logikschaltung 18 auf. Zur Energieversorgung des Senders/Empfängers 17 sowie der Logikschaltung 18 ist in der zweiten Einrichtung ein Energiespeicher 28, beispielsweise einer Batterie, befindlich. Die erste Einrichtung 4 enthält beispielsweise zwei Sender 24a, 24b, wie in Fig. 2 zu sehen ist. Je einer dieser Sender 24a, 24b ist im Türbereich des Kraftfahrzeugs 1 angeordnet, und zwar der Sender 24a in der linken und der Sender 24b in der rechten Autotüre 6. Ergänzend kann noch ein weiterer Sender 24c als dritter Sender der ersten Einrichtung 4 im Heckbereich des Kraftfahrzeugs 1 angeordnet sein. Die Sender 24a, b, c dienen vor allem der Übertragung des Wecksignals 12 sowie des Bereichsabgrenzungssignals 13. Weiter enthält die erste Einrichtung 4 einen weiteren Sender/Empfänger 20, der beispielsweise am Zündschloß 9 angeordnet ist. Zwischen dem Sender/Empfänger 20 und dem Sender/Empfänger 17 werden das Rückantwortsignal 14 sowie das Betriebssignal 15 übertragen.

Das Schließsystem 3 besitzt zusätzlich eine nachfolgend näher erläuterte, bedienungsabhängige Zugangs- und/oder Fahrberechtigung, welche vom Benutzer 2 alternativ oder auch bei einem Ausfall der Keyless Entry/Go-Funktionalität eingesetzt werden kann.

Wie anhand der Fig. 4 zu sehen ist, läßt sich mit Hilfe der in der Art eines elektronischen Schlüssels ausgestalteten zweiten Einrichtung 5 das Schließsystem 3 zur Zugangsberechtigung auch fembedienbar ansteuern. Im vorliegenden Fall lassen sich die Autotüren 6 des Kraftfahrzeugs 1 fembedienbar bis zu einer gewissen maximalen Entfernung vom Kraftfahrzeug 1 ver- und entriegeln, d.h. die Zentralverriegelung für die Autotüren 6 läßt sich so durch den Benutzer 2 betätigen.

Hierfür ist zwischen der zweiten Einrichtung 5 und dem in Fig. 2 gezeigten Sender/Empfänger20 ein codiertes Fernbedienungssignal 21 übertragbar. Selbstverständlich kann auch ein Sender/Empfänger 20' an sonstiger Stelle zentral im Kraftfahrzeug 1 angeordnet sein, beispielsweise am Innenspiegel 22, wie in Fig. 4 zu sehen ist. Als Fernbedienungssignale 21 werden in der Regel elektromagnetische Signale, wie Hf-Signale und/oder Infrarot-Signale o. dgl., verwendet. Die Übertragung des Fernbedienungssignals 21 ist mittels am Gehäuse der zweiten Einrichtung 5 befindlicher, als Tasten ausgestalteter Betätigungsorgane 23 durch den Benutzer 2 auslösbar. Das übertragene Fernbedienungssignal 21 wird dann einer im Kraftfahrzeug 1 befindlichen ersten Einrichtung 4 zugeführt und nach dessen positiver Auswertung, d.h. falls es sich um die berechtigte zweite Einrichtung 5 handelt, wird ein beispielsweise in der jeweiligen Autotüre 6 befindliches Steuergerät 29, das mit der ersten Einrichtung 4 über ein Bussystem 25 in Verbindung steht, zur Ver- oder Entriegelung der Autotüren 6 angesteuert. Bei der in Fig. 4 gezeigten zweiten Einrichtung 5 sind insgesamt drei Tasten 23 vorhanden, und zwar je eine Taste 23 zur Entriegelung und Verriegelung der Autotüren 6 sowie eine weitere Taste 23 für die Öffnung des Kofferraumdeckels.

In Fig. 4 ist weiter die bedienungsabhängige Fahrberechtigung gezeigt. Hierzu wird die zweite Einrichtung 5 mit ihrem Frontteil 26 in eine Aufnahme 27 des gesperrten elektronischen Zündschlosses 9 eingeführt. Bei der Einführung wirkt die zweite Einrichtung 5 auf ein im Zündschloß 9 befindliches Schaltelement, den sogenannten "Schlüssel-steckt"-Schalter, ein. Dadurch wird eine induktive Energieübertragung vom Zündschloß 9 auf die zweite Einrichtung 5 eingeschaltet, so daß die für den bestimmungsgemäßen Betrieb der zweiten Einrichtung 5 benötigte Energie vom Zündschloß 9 geliefert wird. Anschließend tauscht das Zündschloß 9 mit der in der Aufnahme 27 befindlichen zweiten Einrichtung 5 das codierte Betriebssignal 15 aus, wobei es sich beispielsweise um Infrarotsignale handeln kann. Nach positiver Auswertung des übertragenen Betriebssignals 15 ist die Freigabe für das Zündschloß 3 auslösbar. Bei freigegebenem Zündschloß 9 ist dann eine weitere Bewegung der zweiten Einrichtung 5 im Zündschloß 9 zur Inbetriebnahme des Kraftfahrzeugs 1 ermöglicht.

Wie bereits weiter oben näher erläutert, besitzt die zweite Einrichtung 5 einen Bereitschaftszustand, in dem die bedienungsunabhängige Funktionalität wenigstens teilweise ermöglicht ist, mit verringertem Energiebedarf. Allerdings ist im Bereitschaftszustand noch ein gewisser, Energie verzehrender Teilbetrieb der zweiten Einrichtung 5 aufrechterhalten, um das Wecksignal 12 empfangen und verarbeiten zu können. Zur Energieeinsparung bis zum erstmaligen Gebrauch der zweiten Eirichtung 5 und damit Verlängerung der Lebensdauer des Energiespeichers 28 ist die zweite Einrichtung 5 erfindungsgemäß vor deren erstmaligen Inbetriebnahme in einem Schlafzustand befindlich. Im Schlafzustand ist keine bedienungsunabhängige Funktionalität ermöglicht und die zweite Einrichtung 5 besitzt dadurch eine wesentlich verringerte Energieaufnahme.

Allerdings ist im Schlafzustand der zweiten Einrichtung 5 ein gegebenenfalls von der ersten Einrichtung 4 ausgesandtes Wecksignal 12 wirkungslos. Um nunmehr bei Bedarf die bedienungsunabhänige Funktionalität durch den Benutzer 2 veranlaßt in Betrieb nehmen zu können, wird die zweite Einrichtung 5 bei der ersten bedienerabhängigen Authentikation in der Art einer Erstauthentikation vom Schlafzustand in den Bereitschaftszustand, bei dem die bedienungsunabhängige Funktionalität wenigstens teilweise ermöglicht ist, übergeführt. Damit kann der Benutzer 2 bei Bedarf jederzeit, falls sich die zweite Einrichtung 5 noch im Schlafzustand befindet, die bedienungsunabhängige Funktionalität in einfacher Art und Weise aktivieren.

Zweckmäßigerweise ist die zweite Einrichtung 5 im Schlafzustand in einem vollständig abgeschalteten Zustand. Dann fließen im Sender/Empfänger 17 sowie der Logikschaltung 18 der zweiten Einrichtung 5 gemäß Fig. 3 allenfalls Leckströme, womit die zweite Einrichtung 5 im wesentlichen ohne Energieverbrauch ist. Zur Maximierung der Energieeinsparung bietet sich weiterhin an, daß die zweite Einrichtung 5 bereits bei deren Herstellung sowie bis zu deren Auslieferung an den Benutzer 2 im Schlafzustand befindlich ist.

Wie bereits erläutert und anhand von Fig. 4 zu sehen ist, ist im Kraftfahrzeug 1 ein elektronisches Zündschloß 9 für die bedienungsabhängige Fahrberechtigung angeordnet. Zur einfachen Durchführung der bedienungsabhängigen Erstauthentikation durch den Benutzer 2, um die zweite Einrichtung 5 vom Schlaf- in den Bereitschaftszustand überzuführen, bietet es sich an, hierfür das Zündschloß 9 zur verwenden. Dazu wird die zweite Einrichtung 5 in die Aufnahme 27 des Zündschlosses 9 eingeführt. Nachdem die zweite Einrichtung 5 mit ihrem Frontteil 26 in die Aufnahme 27 eingesteckt ist, schaltet sich die induktive Energieübertragung vom Zündschloß 9 auf die zweite Einrichtung 5 ein. Mit Hilfe dieser Energie erfolgt die Einschaltung des aktivierten Zustandes für die zweite Einrichtung 5, wobei der bestimmungsgemäße Betrieb der Logikschaltung 18 sowie des Senders/Empfängers 17 zur Authentifikation aufgenommen wird. Nach Durchführung des bestimmungsgemäßen Betriebs wird nunmehr die zweite Einrichtung 5 in den Bereitschaftszustand zurückversetzt. Im Bereitschaftszustand ist, wie bereits beschrieben, jederzeit der Empfang des Wecksignals 12 für die Einleitung des bestimmungsgemäßen Betriebs möglich. Soweit die zweite Einrichtung 5 zuvor noch nicht in Betrieb genommen worden und bis dahin im Schlafzustand war, ist diese damit nunmehr für die bedienungsunabhängige Funktionalität aktiviert. In der zweiten Einrichtung 5 befindet sich im übrigen noch ein in Fig. 3 gezeigter Zeitmesser 19, der beispielsweise dazu dienen kann, die Einrichtung 5 nur für eine gewisse Zeitdauer freizuschalten.

Die Erfindung ist nicht auf das beschriebene und dargestellte Ausführungsbeispiel beschränkt. Sie umfaßt vielmehr auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: Signal / Wecksignal
- 13:: Signal / Bereichsabgrenzungssignal
- 14:: Signal / Rückantwortsignal
- 15:: Signal / (codiertes) Betriebssignal
- 16:: Türgriff
- 17:: Sender/Empfänger (in zweiter Einrichtung)
- 18:: Logikschaltung
- 19:: Zeitmesser
- 20,20':: Sender/Empfänger (in erster Einrichtung)
- 21:: Fernbedienungssignal
- 22:: Innenspiegel
- 23:: Betätigungsorgan / Taste
- 24a,b,c:: Sender (in erster Einrichtung)
- 25:: Bussystem
- 26:: Frontteil (an zweiter Einrichtung)
- 27:: Aufnahme (von Zündschloß)
- 28:: Energiespeicher (in zweiter Einrichtung)
- 29:: Steuergerät (in Autotüre)

## Patentansprüche

1. schließsystem, für die bedienungsunabhängige zugange- und/oder Fahrberechtigung in der Art einer Keyless Entry/Go-Funktionalität und/oder für die bedienungsabhängige Zugangs- und/oder Fahrberechtigung bei einem Kraftfahrzeug (1), mit einer wenigstens zwei Zustände besitzenden, als Steuereinrichtung ausgebildeten ersten Einrichtung (4), wie einer Steuereinrichtung zur Ent- und/oder verriegelung der Autotüren (6), des Zündschlosses (9), der Lenkradverriegelung (10), zur Freigabe und/oder Sperrung der Wegfahreperre, des Motorsteuergeräts, und mit einer zugehörigen, in der Art eines elektronischen Schlüssels, eines ID-Gebers, einer Chipkarte ausgebildeten zweiten Einrichtung (5), wobei die beiden Einrichtungen (4, 5) zu deren bestimmungsgemäßen Betrieb Mittel zum Senden und/oder Empfangen von Signalen besitzen, und wobei es sich insbesondere bei wenigstens einem der zwischen der zweiten Einrichtung (5) und der ersten Einrichtung (4) übertragenen Signale (7) um ein codiertes Betriebeaignal (15) zur Authentikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist,
**dadurch gekennzeichnet,**
**dass** die zweite Einrichtung (5) vor deren erstmaligen Inbetriebnahme in einem Schlafzustand, bei dem keine bedienungsunabhängige Funktionalität ermöglicht ist, mit verringerter Energieaufnahme befindlich ist, und dass die zweite Einrichtung (5) bei der ersten bedienerabhängigen Authentikation in der Art einer Erstauthentikation vom Schlafzustand in einen Bereitschaftszustand, bei dem eine bedienungsunabhängige Funktionalität wenigstens teilweise ermöglicht ist, übergeführt wird, wobei die Erstauthentikation nach Einführen der zweiten Einrichtung (5) in eine Aufnahme (27) eines elektronisches Zündschlosses (9) dadurch durchgeführt wird, daß nach dem die zweite Einrichtung mit ihrem Frontteil in die Aufnahme eingesteckt ist, sich die induktive Energieübertragung vom Zündschlaß auf die zweite Einrichtung einehaltet und nach Durchführung des bestimmungsgemäßen Betriebs von Authentifikation-Schaltungen die zweite Einrichtung in den Bereitschaftzustand Zurückversetzt wird.

2. Schließsystem nach Anspruch 1, **dadurch gekennzeichnet, dass** die zweite Einrichtung (5) im Schlafzustand in einem vollständig abgeschalteten Zustand, im Wesentlichen ohne Energieverbrauch befindlich ist.

3. Schließsystem nach Anspruch 1 oder 2, **dadurch gekennzeichnet, dass** die zweite Einrichtung (5) bei deren Herstellung, und bei deren Auslieferung an den Benutzer (2) , im Schlafzustand befindlich ist.

## Claims

1. Locking system, for operation-independent access authorization and/or driving authorization in the form of a keyless entry/go function and/or for the operation-dependent access authorization and/or driving authorization for a motor vehicle (1), having a first device (4) which is embodied as a control device and has at least two states, such as a control device for unlocking and/or locking car doors (6), the ignition lock (9), the steering wheel locking means (10), for enabling and/or disabling the immobilizer, the engine control unit, and having an associated second device (5) which is embodied in the manner of an electronic key, of an ID transmitter, a chip card, the two devices (4, 5) having, for their intended operation, means for transmitting and/or receiving signals, in particular at least one of the signals (7) which are transmitted between the second device (5) and the first device (4) being a coded operating signal (15) for authenticating the second device (5) so that, after positive evaluation of the operating signal (15) which is transmitted, a change in the state of the first device (4) can be brought about when the second device (5) is authorized, **characterized in that**, before the second device (5) is firstly activated, it is in a sleep state in which no operation-independent function is permitted and which has reduced consumption of energy, and **in that**, during the first operator-dependent authentication, the second device (5) is changed over, in the manner of a first authentication, from the sleep state into a standby state in which an operation-independent function is at least partially made possible, it being possible to carry out the initial authentication after the second device (5) has been inserted into a receptacle (27) of an electronic ignition lock (9) is implemented **in that** after the second device has been plugged with its front part into the receptacle, the inductive transmission of energy from the ignition lock to the second device switches and the second device is reset to the standby state after authentication switching operations have been carried out as required by specifications.

2. Locking system according to claim 1, **characterized in that** in the sleep state the second device (5) is in a completely switched-off state, essentially with no consumption of energy.

3. Locking system according to claim 1 or 2, **characterized in that** the second device (5) is in the sleep state while it is being manufactured, and in particular while it is being delivered to the user (2)

## Revendications

1. Système de fermeture pour l'autorisation d'accès et/ou de déplacement indépendante de l'utilisation sous la forme d'une fonctionnalité d'entrée/aller sans clé et/ou pour l'autorisation d'accès et/ou de déplacement dépendante de l'utilisation sur un véhicule automobile (1), comprenant un premier dispositif (4) réalisé sous la forme d'un dispositif de commande et possédant au moins deux états, par exemple un dispositif de commande pour déverrouiller et/ou verrouiller les portières de l'automobile (6), la clé de contact (9), le verrouillage du volant (10), pour libérer et/ou bloquer le dispositif antivol, le bloc de commande du moteur, et comprenant un deuxième dispositif (5) associé qui est réalisé sous la forme d'une clé électronique, d'un émetteur d'identifiant, d'une carte à puce, les deux dispositifs (4, 5) possédant pour leur utilisation conforme à leur destination des moyens pour émettre et/ou recevoir des signaux, et au moins l'un des signaux (7) transmis entre le deuxième dispositif (5) et le premier dispositif (4) étant notamment un signal de fonctionnement codé (15) destiné à l'authentification du deuxième dispositif (5), de telle sorte qu'après une interprétation positive du signal de fonctionnement (15) transmis, si le deuxième dispositif (5) est autorisé, il est possible de réaliser une modification de l'état du premier dispositif (4), **caractérisé en ce que** le deuxième dispositif (5), avant sa première *mise en service* permet une fonctionnalité indépendante de l'utilisation, se trouve avec une consommation d'énergie réduite, et que le deuxième dispositif (5), lors de la première authentification dépendante de l'utilisateur est amené en une sorte de première authentification de l'état de repos à un état prêt dans lequel une fonctionnalité indépendante de l'utilisateur est possible au moins partiellement, la première authentification étant effectuée après l'introduction du deuxième dispositif (5) dans un logement (27) d'un serrure de contact électronique (9) de telle sorte qu'après que le deuxième dispositif soit inséré dans le logement avec sa partie avant, la transmission d'énergie inductive de la serrure de contact vers le deuxième dispositif s'active et, après avoir effectué le fonctionnement conforme à leur destination des circuits d'authentification, le deuxième dispositif est ramené en état prêt.

2. Système de fermeture selon la revendication 1, **caractérisé en ce que** le deuxième dispositif (5), lorsqu'il est en état de veille, se trouve dans un état complètement désactivé, essentiellement sans consommation d'énergie.

3. Système de fermeture selon la revendication 1 ou 2, **caractérisé en ce que** le deuxième dispositif (5), lors de sa fabrication et lors de sa livraison à l'utilisateur (2), se trouve en état de veille.
